(19) Europäisches Patentamt / European Patent Office / Office européen des brevets

(11) **EP 4 056 328 B1**

(12) **EUROPEAN PATENT SPECIFICATION**

(45) Date of publication and mention
of the grant of the patent:
**27.08.2025  Bulletin 2025/35**

(21) Application number: **22161475.3**

(22) Date of filing: **10.03.2022**

(51) International Patent Classification (IPC):
**B25J 5/00** *(2006.01)*        **G05B 19/42** *(2006.01)*
**B25J 5/06** *(2006.01)*        **E02F 3/04** *(2006.01)*
**G05B 19/427** *(2006.01)*

(52) Cooperative Patent Classification (CPC):
**G05B 19/42; E02F 3/286; E02F 3/434; E02F 3/437;
E02F 9/2041; G05B 19/427;** E02F 9/265;
G05B 2219/36476; G05B 2219/36478

(54) **METHOD FOR RECORDING A MANOEUVRE OF AN OPERABLE ARM OF A HEAVY VEHICLE**

VERFAHREN ZUM AUFZEICHNEN EINES MANÖVERS EINES ARBEITSARMES EINES
NUTZFAHRZEUGES

PROCÉDÉ D'ENREGISTREMENT D'UNE MANŒUVRE D'UN BRAS DE FONCTIONNEMENT D'UN
VÉHICULE LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.03.2021  IT 202100005975**

(43) Date of publication of application:
**14.09.2022  Bulletin 2022/37**

(73) Proprietor: **CNH Industrial Italia S.p.A.
10156 Torino (IT)**

(72) Inventors:
• **Antonucci, Davide
  10154 Turin (IT)**
• **Aresta, Alessio
  72023 Brindisi Mesagne (IT)**
• **Carvignese, Cosimo
  72023 Mesagne (BR) (IT)**
• **Venezia, Antonio
  10153 Torino (IT)**

(74) Representative: **CNH Industrial IP Department
Leon Claeysstraat 3A
8210 Zedelgem (BE)**

(56) References cited:
**EP-A1- 3 770 333      US-A1- 2020 122 325**

• **SICILIANO BRUNO ET AL: "Robotics Modelling,
Planning and Control - Chapter 4", ROBOTICS :
MODELLING, PLANNING AND CONTROL, 31
December 2009 (2009-12-31), UK, pages 160 -
189, XP055859539, ISBN: 978-1-84628-641-4,
Retrieved from the Internet <URL:https://link.
springer.com/book/10.1007/978-1-84628-642-1>
DOI: 10.1007/978-1-84628-642-1**

## Description

TECHNICAL FIELD

The present invention relates to a method for recording a manoeuvre of an operable arm of a heavy vehicle.

BACKGROUND OF THE INVENTION

As known, a heavy vehicle provided with a multi-joint arm is suitable to perform different tasks due to its arm capability and its ability to manipulate, carry and dump a load. Examples of such heavy vehicle are a telehandler, an excavator or a wheel loader.

Even if the manoeuvres that are carried out by the heavy vehicle are numerous and different between them, it usually happens that only a subset of them must be repeated for long periods. For example, considering the operation of truck loading performed by an excavator, several basic manoeuvres can be identified: load the bucket at a first variable position, rise the boom, displace the boom, dump the load at a fixed position, swing to a second variable position to load again the bucket, and repeat these steps. In this case, there are several common and repetitive paths that a vehicle can store and repeat automatically. Another example of repetitive operations is the Y-cycle of a telehandler, through which the telehandler can load the bucket with a desired product (e.g., grain), drive to the desired location and dump the load. Even though the driving operation depends on an operator driving the heavy vehicle and cannot be easily reproduced, several operations can be repeated in an automated way: rise the boom, extend the boom to reach the desired dump position, dump the bucket, lower to carry position, etc. Automatically performing some manoeuvres could result in a reduction of the operator's amount of work and distress, and in an efficiency improvement.

By acquiring data from each joint of the arm, it is possible to record a manoeuvre and to automatically repeat it.

Known solutions such as EP3770333A1 to record a manoeuvre comprise sampling such data at a fixed sampling rate to construct a trace, and repeating the recorded trace upon receiving a trigger by the operator. However, using a fixed sampling rate results in a conspicuous memory allocation and could cause the filling up of the on-board storage unit. For example, considering a telehandler having three joints (boom lift, telescope and carrier tilt) which performs a standard cycle of boom lifting, boom extension, load dumping and bucket shaking in about 10s and has an embedded vehicle controller working with a time cycle of about 10ms, a variable of about 16bit for each joint position (three in total), a memory allocation of about 6kbyte is required to store said standard cycle. In case several manoeuvres are stored, the required memory allocation increases accordingly.

The heavy vehicles equipped with an automatic trajectory generator are provided with a finite data storage capability, and such solution of manoeuvre recording drastically reduces the available amount of internal memory. An external dedicated memory could be used to increase the data storage capability, but this also increases the overall cost and the complexity of the heavy vehicle.

Moreover, the known manoeuvre recording do not take into account the nature of the manoeuvre to be recorded, and this leads to a non-optimal recording and execution of the manoeuvre. In particular, by reducing the sampling rate it is possible to reduce the required memory allocation, but manoeuvres comprising fast movements cannot be adequately recorded.

SUMMARY OF THE INVENTION

An aim of the present invention is to satisfy the above mentioned needs.

The aforementioned aim is reached by a method for recording a manoeuvre as claimed in the appended set of claims.

BRIEF DESCRIPTION OF DRAWINGS

For a better understanding of the present invention, preferred embodiments thereof are now described, purely by way of non-limiting example and with reference to the attached drawings, wherein:

- Figure 1 is a perspective view of a heavy vehicle provided with a controllable arm, according to an embodiment of the present invention;
- Figure 2 is a block diagram schematically showing the heavy vehicle of Figure 1, according to an embodiment of the present invention;

- Figure 3 is a block diagram schematically showing a manoeuvre recording method executed by the heavy vehicle of Figure 1, according to an embodiment of the present invention;
- Figure 4 is a graphic showing the angular position of a joint of the controllable arm of Figure 1 during a manoeuvre of the same, as a function of time;
- Figure 5 is a graphic showing the angular speed of said joint of the controllable arm of Figure 1, as a function of time;
- Figure 6 is a graphic showing the angular position of said joint of the controllable arm of Figure 1, as a function of time, where position interest points of the curve representing said angular position are identified;
- Figure 7 is a graphic showing the position interest points of Figure 6 and a reconstructed trajectory of said joint of the controllable arm of Figure 1, as a function of time; and

- Figures 8-9 are block diagrams schematically showing control blocks of the heavy vehicle of Figure 1, according to respective embodiments of the present invention.

DETAILED DESCRIPTION OF THE INVENTION

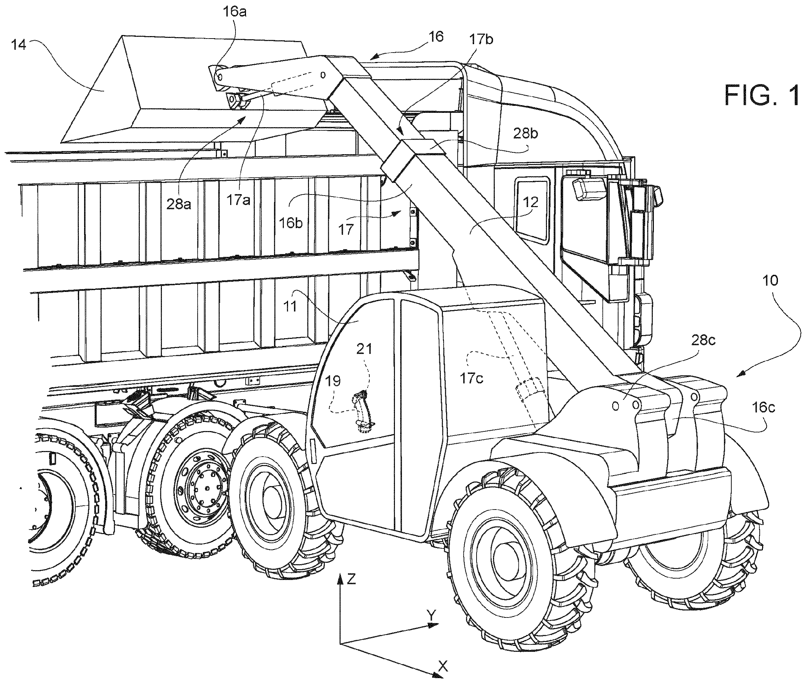

Figure 1 shows, in a triaxial Cartesian reference system defined by axis X, Y and Z, a vehicle 10 provided with a controllable arm 12. In particular, the vehicle 10 is a heavy vehicle, such as a telehandler, an excavator or a wheel loader (Figure 1 shows a telehandler with a bucket 14 moved through the controllable arm 12).

The controllable arm 12 is provided with at least one joint 16 actuated by a respective joint actuator 17 (hydraulic actuator, in particular a cylindrical actuator) coupled to the joint 16. In details, Figure 1 shows the controllable arm 12 having three joints 16 (i.e., a tilt joint, a telescopic joint and a boom lift joint, indicated respectively with the reference numerals 16a, 16b and 16c) and three respective joint actuators 17 (i.e., a tilt actuator, a telescopic actuator and a boom lift actuator, indicated respectively with the reference numerals 17a, 17b and 17c).

Moreover, the vehicle 10 includes an input command acquisition device 19, such as a joystick (in the following indicated as joystick 19), for example placed in a cabin 11 of the vehicle 10. According to an aspect of the present invention, the joystick 19 comprises a manoeuvre recording button 21. During use, the vehicle 10 is driven by a user who controls the controllable arm 12 by providing an input command through the joystick 19. As better described in the following, the user can further record a manoeuvre of the vehicle 10 by providing manoeuvre commands (e.g., a start recording signal and a stop recording signal) through the manoeuvre recording button 21. As a non-limiting example, the manoeuvre of the vehicle 10 starts to be recorded when the user presses the manoeuvre recording button 21 for a predefined period (i.e., provides the start recording signal), such as for 3 sec, and stops to be recorded when the user rapidly presses the manoeuvre recording button 21 (i.e., provides the stop recording signal), such as for less than 1 sec.

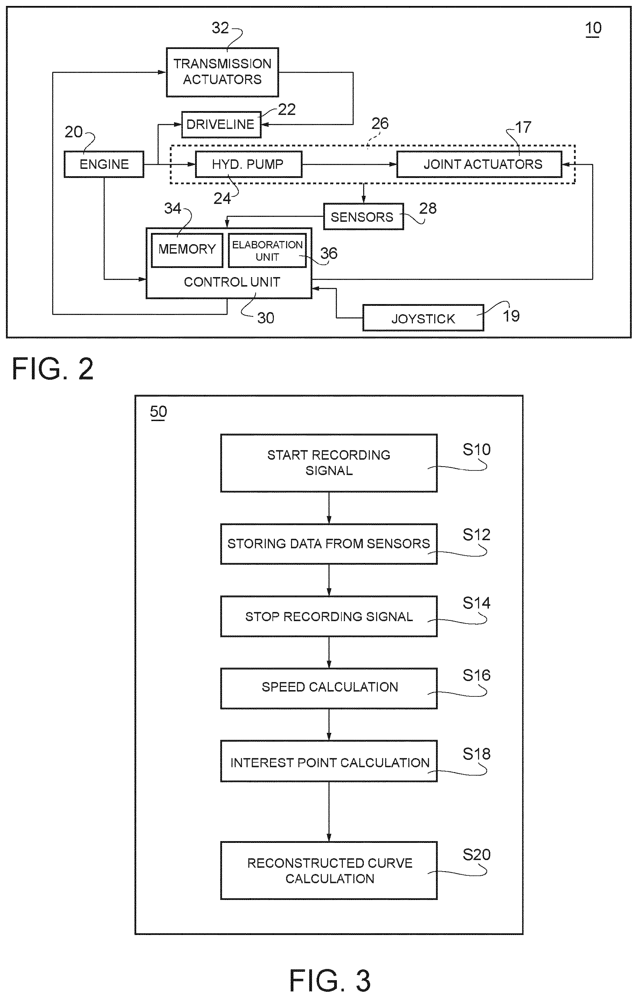

As illustrated in Figure 2, the vehicle 10 further comprises an engine 20 (e.g., a thermal engine) mechanically coupled in a per se known way both to a driveline 22 and to a hydraulic pump 24. The hydraulic pump 24 is comprised in a hydraulic circuit 26 and provides hydraulic power to the joint actuators 17 (included themselves in the hydraulic circuit 26) in order to actuate the joints 16 of the controllable arm 12.

One or more sensors 28 are coupled to the controllable arm 12 so as to acquire data of the joints 16 in the joint space. According to an embodiment of the present invention, illustrated in Figure 1, the sensors 28 comprise a tilt angular sensor 28a coupled to the tilt joint 17a, a telescopic sensor 28b coupled to the telescopic joint 17b, and a boom angular sensor 28c coupled to the boom lift joint 17c. The tilt angular sensor 28a and the boom angular sensor 28c acquire the angular positions of the tilt joint 17a and, respectively, of the boom lift joint 17c, and the telescopic sensor 28b acquires data indicative of a telescopic extension of the telescopic joint 17b.

A control unit 30 (e.g., a vehicle control unit or a dedicated controller or control unit) of the vehicle 10 is electrically coupled to the sensors 28, the joint actuators 17 and the joystick 19. The control unit 30 acquires the input command and the manoeuvre commands by the user through the joystick 19, acquires the data of the joints 16 through the sensors 28, and controls the joint actuators 17 (thus, the controllable arm 12) as better described in the following. Optionally, the control unit 30 further acquires engine data indicative of the status and working of the engine 20 from further sensors (not shown) coupled to the engine 20, and controls transmission actuators 32 in a per se known way. The transmission actuators 32 are coupled to the driveline 22 to control the driveline 22 in a per se known way (an example of the transmission actuators 32 are the hydraulic valves controlling the position of clutches of the vehicle 10 in order to engage a gear of the vehicle 10, selected by the user). As an example, the control unit 30 comprises a data storage unit 34 (referred to in the following as memory 34, such as a RAM memory) and an elaboration unit 36 electrically coupled between them.

During use, the vehicle 10 is driven by the user and the controllable arm 12 is controlled through the joystick 19. When said manoeuvre of the controllable arm 12 is to be recorded, the user provides the start recording signal through the manoeuvre recording button 21, executes the manoeuvre (i.e., operates the controllable arm 12 and the vehicle 10 according to the specific manoeuvre to be performed) and, at the end of the manoeuvre, provides the stop recording signal through the manoeuvre recording button 21.

More in details, a manoeuvre recording method 50, illustrated in Figure 3, is implemented by the control unit 30 (in particular, by the elaboration unit 36) to record said manoeuvre of the vehicle 10.

The manoeuvre recording method 50 starts, at step S10, when the start recording signal is provided to the control unit 30 through the manoeuvre recording button 21.

At step S12, consecutive to step S10, the control unit 30 temporarily stores, e.g. in the memory 34, the data of the joints 16 acquired through the sensors 28, while the user executes the manoeuvre by driving the vehicle 10 and controlling the controllable arm 12.

At step S14, consecutive to step S12, the stop recording signal is provided to the control unit 30 through the manoeuvre recording button 21, and the control unit 30 stops recording the data of the joints 16.

Therefore, the control unit 30 stores (until required, i.e. step S18 described in the following) the data of the joints 16 during the period comprised between (and including) the start recording signal and the stop recording signal.

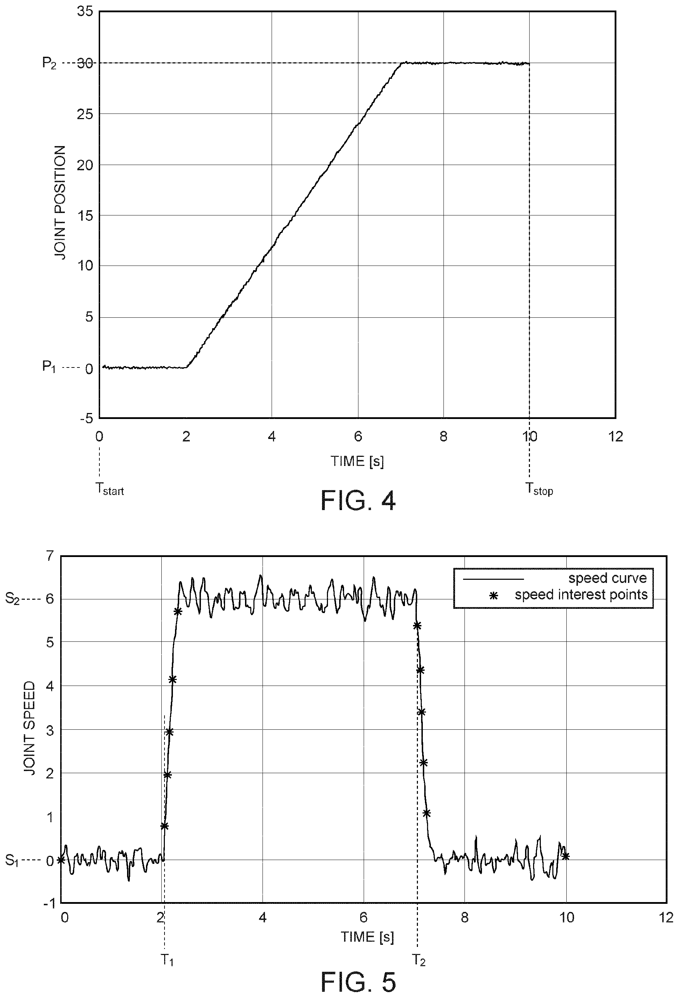

In the following, reference is made to the exemplary case in which the angular position of the boom lift joint 17c is acquired through the boom angular sensor 28c and stored (Figure 4). Nevertheless, the following discussion analogously applies to the cases of recording the angular position of the tilt joint 17a through the tilt angular sensor 28a, or the telescopic extension of the telescopic joint 17b through the telescopic sensor 28b, or any simultaneous recording of the abovementioned data from the sensors 28.

In particular, Figure 4 illustrates the behaviour, as a function of time, of the angular position of the boom lift joint 17c (in details, as an angular position variation from the angular position of the boom lift joint 17c when the start recording signal is received). The acquired curve of the angular position of the boom lift joint 17c starts at a start time $T_{start}$ (i.e., the time at which the start recording signal is received by the control unit 30) and ends at a stop time $T_{stop}$ (i.e., the time at which the stop recording signal is received by the control unit 30). As an example, the acquired curve shows: a first portion between the start time $T_{start}$ and a first intermediate time $T_1$, that is substantially rectilinear and with about zero slope; a second portion between the first intermediate time $T_1$ and a second intermediate time $T_2$, that is substantially rectilinear and with non-zero slope; and a third portion between the second intermediate time $T_2$ and the stop time $T_{stop}$, that is substantially rectilinear and with about zero slope. Therefore, the angular position of the boom lift joint 17c is constant in the first portion at a first value $P_1$, linearly varies in the second portion from the first value $P_1$ to a second value $P_2$, and is constant in the third portion at a second value $P_2$.

At step S16, consecutive to step S14, an angular speed of the boom lift joint 17c is calculated as a function of the acquired angular position of the boom lift joint 17c. According to an embodiment, the angular speed is calculated as a first derivative of the acquired angular position of the boom lift joint 17c. According to a preferred embodiment, the angular speed is calculated by applying a filter to the acquired angular position of the boom lift joint 17c. Said filter approximates the first derivative behaviour at low frequencies (e.g., lower than about 10Hz) where the ratio between noise measurement and actual signal of the boom angular sensor 28c is small (e.g., lower than about 10%), and at the same time limits a bandwidth of the angular speed at a predefined frequency in order to not amplify the noise at high frequencies (e.g., minimum noise attenuation of -20dB/dec). In particular, the filter is a second order band-pass filter, having the following mathematical form in Laplace domain:

$$D = k \frac{s}{(\tau s + 1)^2}$$

where $D$ is the filter, $k$ is a multiplication parameter (e.g., normally set to 1), s is the complex variable of the Laplace domain, and $\tau$ is a time constant of the filter (e.g. $\tau = 0.016s$ if the cut-off frequency of the filter is 10Hz) establishing a cut-off point of the filter (i.e., establishing where the filter stops behaving like a derivative and starts attenuating the noise at high frequencies).

Figure 5 illustrates the behaviour, as a function of time, of the angular speed of the boom lift joint 17c calculated through said filter. The calculated curve of the angular speed shows: a first portion between the start time $T_{start}$ and about the first intermediate time $T_1$, presenting values about a first value $S_1$ (e.g., equal to zero, although several peaks and valleys can be noticed due to measurement noise); a second portion between about the first intermediate time $T_1$ and about the second intermediate time $T_2$, presenting values about a second value $S_2$ different from the first value $S_1$ (although several peaks and valleys can be noticed because of the noise within measurement); and a third portion between about the second intermediate time $T_2$ and the stop time $T_{stop}$, presenting values at about the first value $S_1$ (although several peaks and valleys can be noticed due to the noise in the measurement). Therefore, the angular speed of the boom lift joint 17c varies from the first value $S_1$ to the second value $S_2$ at about the first intermediate time $T_1$ (in details, in a first time period at the first intermediate time $T_1$, e.g. the first time period being comprised between 0.2 s and 5 s), and varies from the second value $S_2$ to the first value $S_1$ at about the second intermediate time $T_2$ (in details, in a second time period at the second intermediate time $T_2$, e.g. the second time period being comprised between 0.4 s and 10 s).

At step S18, consecutive to step S16, speed interest points (or speed relevant points, or speed focal points, or first speed interest points) of the curve of the angular speed of the boom lift joint 17c are calculated. The speed interest points are a plurality of points of the calculated curve of the angular speed, which are indicative of respective significant variations of the angular speed. In other words, each speed interest point is identified as a point of the angular speed curve, defined by two coordinates, i.e. a time instant and angular speed value. Each speed interest point is selected from the points of the angular speed curve so that its angular speed value presents, in absolute value, a speed difference with respect to the angular speed value of the immediately precedent speed interest point, that is greater than a predefined speed threshold. Therefore, each couple of speed interest points that are immediately consecutive to each other is indicative of said reciprocal speed difference being greater than the predefined speed difference. The first point of the angular speed curve (i.e., the point having as time instant the start time $T_{start}$) is considered to be the first speed interest point of the speed interest point set, and the last point of the angular speed curve (i.e., the point having as time instant the stop time $T_{stop}$) is considered to be the last speed interest point of the speed interest point set.

According to the present invention, the speed interest point set comprises the points of the angular speed curve for which the following relationship is satisfied:

$$\{x\} = \{t: |\dot{y}_x - \dot{y}_m^x| > a\}$$

wherein $\{x\}$ is the speed interest point set, $t$ is the time instant, $a$ is the predefined speed difference (computed on the basis of the features of the chosen boom angular sensor 28c; e.g., given the measurement error of the boom angular sensor 28c in terms of standard deviation $\sigma$, it is possible to approximate $a$ as $a=3\cdot\sigma$), $\dot{y}_x$ is the speed value of the speed interest point at the time instant t (i.e., the considered speed interest point), and $\dot{y}_m^x$ is a speed integral average of the angular speed in the time interval between the time instant of the immediately precedent speed interest point and the current time instant t. In particular:

$$\dot{y}_x = \dot{y}(t = x)$$

$$\dot{y}_m^x = \frac{\int_m^x \dot{y}(t)dt}{x - m}$$

Wherein $\dot{y}(t)$ is the angular speed and m is the speed interest point which is immediately precedent to the considered speed interest point. Therefore, the speed integral average $\dot{y}_m^x$ is an integral average over time of the considered speed interest point, calculated from said immediately precedent speed interest point. In other words, according to the present embodiment, in order to calculate each immediately successive speed interest point starting from a considered speed interest point of the speed interest point set, the following steps are executed: the integral average of the joint speed signal is calculated, starting from the time value of the considered speed interest point to an intermediate time value successive to the time value of the considered speed interest point; a speed absolute difference is calculated between the integral average and the speed of boom lift joint 17c at the considered speed interest point; and if the speed absolute difference is lower than or equal to the predefined speed difference $a$, these steps bare repeated by updating the intermediate time value to a further time value that is successive to the intermediate time value, or, if the speed absolute difference is greater than the predefined speed difference $a$, the intermediate time value and the speed of boom lift joint 17c at the intermediate time value are set as coordinates of said immediately successive speed interest point.

In details, Figure 5 further shows the speed interest points, together with the angular speed curve.

Advantageously, the speed interest point set can also comprise one or more artefact interest points (or second speed interest points) if the angular speed curve presents at least one portion that is substantially constant for a long period (e.g., the first and the third portions). The artefact interest points are additional speed interest points for which the above-mentioned relationship is not satisfied, but which are considered and added to prevent manoeuvre reconstruction errors, as better specified in the following. In details, starting from the speed interest point set calculated according to the above-mentioned relationship, for each couple of immediately consecutive speed interest points $x_n$ and $x_{n+1}$, a respective time distance $\Delta t$ between them is determined (i.e., $\Delta t = t_{x_{n+1}} - t_{x_n}$), and it is determined whether such time distance $\Delta t$ is greater than a threshold time distance $\Delta t_{thres}$ (e.g., equal to 500 ms). If $\Delta t \leq \Delta t_{thres}$, no artefact interest point is added between the immediately consecutive speed interest points $x_n$ and $x_{n+1}$, and the successive couple of immediately consecutive speed interest points $x_{n+1}$ and $x_{n+2}$ is examined. If $\Delta t > \Delta t_{thres}$, an artefact interest point $x_{art}$ is added between the immediately consecutive speed interest points $x_n$ and $x_{n+1}$, at the time instant $t_{art} = t_{x_n} + \Delta t_{thres}$, and the determination is repeated for the couple of speed interest points $x_{art}$ and $x_{n+1}$.

In the following, the wording speed interest point set is used to consider both the speed interest points calculated according to the abovementioned relationship and the artefact interest points, if any. Therefore, the speed interest point set so calculated presents an agglomeration in time of speed interest points where the angular speed curve significantly varies, but no couple of speed interest points presents a relative time distance greater than the threshold time distance $\Delta t_{thres}$.

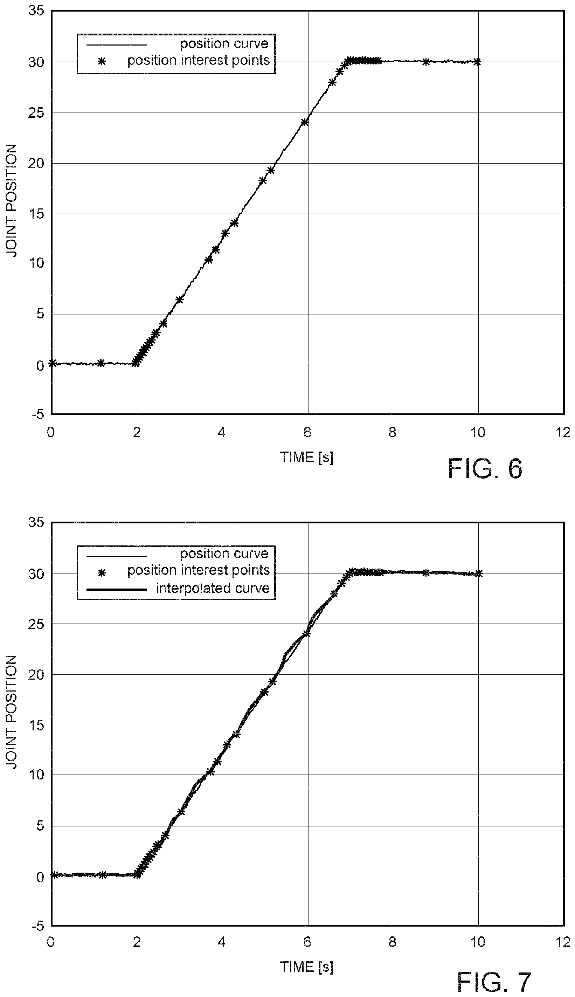

Moreover, at step S18 a position interest point set is calculated based on the speed interest point set, and is stored (e.g., in the memory 34). In particular, position interest points are the points of the angular position curve whose time values correspond to the time values of the speed interest points of the speed interest point set. Therefore, each speed interest point is associated to a respective position interest point, in that they are placed at the same time instant in the time axis. Figure 6 shows the position interest points, together with the same angular position curve of Figure 4.

At step S20, consecutive to step S18, a reconstructed curve of the angular positions of the boom lift joint 17c is calculated based on the position interest points obtained at step S18. In particular, the reconstructed curve is obtained through interpolation of the position interest points. According to an embodiment, a linear, cubic, spline, or exponential interpolation is used. According to a preferred embodiment, exemplarily described in details in the following, a quadratic interpolation is used, so as to reduce the jerk of the controllable arm 12 when the reconstructed manoeuvre is automatically executed.

In details, the quadratic (or parabolic) interpolation is an interpolation performed through the following quadratic formula:

$$p(t) = at^2 + bt + c$$

wherein $p(t)$ is the quadratic profile, $t$ is the time variable and $a, b, c$ are interpolation coefficients. The interpolation coefficients are calculated by applying the quadratic formula to three focal points. In particular, for each position interest point $x_n$, a system of three equations is solved (i.e., $P_k = ax_k^2 + bx_k + c$, where $k = \{n, n + 1, n + 2\}$) to calculate the coefficients $a,b,c$ for the considered position interest point $x_n$, and such coefficients $a,b,c$ are used to calculate the position quadratic interpolation $p(i) = ai^2 + bi + c$ at each time instant $i$ comprised between the considered position interest point $x_n$ and the immediately consecutive position interest point $x_{n+1}$ (i.e., $t_{x_n} \leq i < t_{x_{n+1}}$). If the position interest point set comprises N position interest points, $1 \leq n \leq N - 2$ and the coefficient calculation stops at $n = N - 2$. For time instants successive to the position interest point $x_{N-2}$, the values of the reconstructed curve are calculated based on the last calculated coefficients $a,b,c$ (i.e., those calculated for the position interest point $x_{N-2}$). Therefore, each position interest point $x_n$ is associated to respective coefficients $a,b,c$ that are used to calculate the reconstructed curve of the angular positions of the boom lift joint 17c in the time interval comprised between the position interest point $x_n$ and the immediately consecutive position interest point $x_{n+1}$.

The manoeuvre recording method 50 thus ends with the calculation of the reconstructed curve (or trajectory) of the angular positions of the boom lift joint 17c. The reconstructed curve, illustrated in Figure 7, is a reconstructed trajectory (i.e., a set point) of the boom lift joint 17c during the manoeuvre executed by the user, and it can be automatically repeated to reproduce said manoeuvre without the need of the user's intervention.

In particular, the reconstructed trajectory is generated by the control unit 30 whenever the manoeuvre has to be automatically executed. In further details, the control unit 30 controls the vehicle 10 to automatically repeat the manoeuvre, based on the reconstructed trajectory, upon receiving a manoeuvre repeating command provided by the user through, for example, the manoeuvre recording button 21 (e.g., the user presses the manoeuvre recording button 21 for about 1 sec). Therefore, when, during the use of the vehicle 10, the control unit 30 receives the manoeuvre repeating command from the user, the control unit 30 uses the position interest point set (stored in the memory 34) to calculate the reconstructed trajectory and to use it to control the controllable arm 12. This allows to store in the memory 34 only the time instants of speed interest point set and the angular position at each of these time instants, and not the entire angular position curve or the reconstructed trajectory.

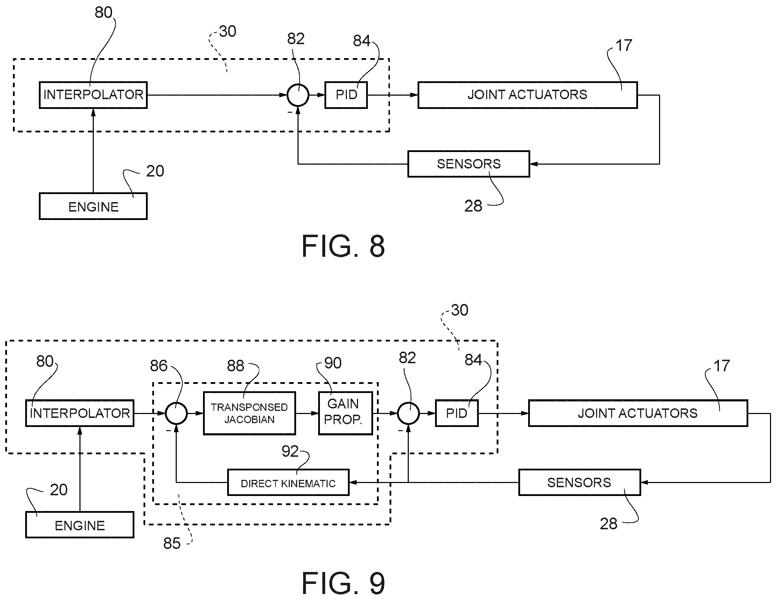

Figure 8 shows blocks of the control unit 30 allowing to automatically perform the manoeuvre, according to an embodiment of the present invention.

As shown in Figure 8, the control unit 30 is electrically coupled to the joint actuators 17, to control them, and to the sensors 28, to receive from them the data of the joints 16. Optionally, the control unit 30 is further electrically coupled to the engine 20 to acquire data from it, as better described in the following.

The control unit 30 (in particular, the elaboration unit 36) comprises an interpolator block 80, a first subtraction block 82 and a PID ("proportional-integral-derivative") block 84 of a known type. The interpolator block 80 implements the manoeuvre recording method 50, and in particular uses the position interest point set to calculate the reconstructed trajectory of the boom lift joint 17c, upon reception of the manoeuvre repeating command. The reconstructed trajectory is received (one reconstructed position at each time instant) as a sum input by the first subtraction block 82. The first subtraction block 82 further receives as a subtraction input the data from the sensors 28 (in the exemplary case here described, the angular position of the boom lift joint 17c) and outputs an error signal that is received as an input by the PID block 84. The PID block 84 elaborates the error signal in a per se known way and generates an actuator control signal that is sent to the joint actuators 17 (in the exemplary case here described, the boom lift joint 17c), to control them.

Therefore, the control unit 30 can control the joint actuators 17 (and thus the controllable arm 12) based on the reconstructed trajectory, thus allowing to automatically repeat the recorded manoeuvre.

From what has been described and illustrated previously, the advantages of the present invention are evident.

The manoeuvre recording method 50 allows to record the manoeuvre executed by the user by only storing the position speed interest points and not the entire trajectory, so that the recorded trajectory can be automatically calculated and repeated when necessary. This reduces the duties and the fatigue of the user driving the vehicle 10, and prevents from manual errors when executing standard manoeuvres. Moreover, by using the position interest points and thus a variable sampling rate of the measured data curve, the information to be stored by the control unit 30 is strongly reduced (up to about -80% with respect to the known fixed sampling rate). Therefore, more manoeuvres can be recorded and stored by the vehicle 10 without the need of additional dedicated memories. Moreover, different manoeuvres having different movement speed (equivalently, the same manoeuvre comprising low-speed movements and high-speed movements) can be adequately and dynamically sampled, so that the reconstructed trajectory can better approximate the measured one.

By including the artefact interest points, reconstruction errors during interpolation are reduced by increasing the number of constraints to be applied also along substantially rectilinear portions of the angular speed curve.

Moreover, using the filter for calculating the angular speed from the angular position improves the quality of the angular speed calculation. In fact, the noise and artefacts at high frequencies are strongly reduced with respect to the standard first time derivative approach. In particular, the coefficient $\tau$ can range from a lower value to an upper value. The lower value impacts on the maximum frequency allowed to be kept into consideration, whilst the upper value affects the desired amount of noise reduction. Moreover, such filter requires an easy digital implementation and low computational resources to be used.

Furthermore, using the quadratic interpolation allows to reduce the overall jerk of the controllable arm 12 when the manoeuvre is automatically repeated. In fact, the quadratic interpolation of the angular position causes the angular speed to assume a trapezoidal profile, and thus an angular acceleration of the joints 16 is not impulsive and the jerk of the vehicle 10 is milder.

Finally, it is clear that modifications and variations may be made to what has been described and illustrated herein, without thereby departing from the scope of the present invention, as defined in the annexed claims.

In particular, the sensors 28 could include IMUs ("inertial measurement units") or built-in encoders within the joint actuators 17 (to retrieve the displacement of each cylindrical joint actuator 17, thus being able to calculate the respective positions of the joint actuators 17). By using IMUs, the linear and angular speed of the joints 16 can be directly measured, thus avoiding to perform the step S16 of the manoeuvre recording method 50, relative to the angular speed calculation.

Moreover, the sensors 28 could acquire data of the joints 16 in the Cartesian space, and not in the joint space as previously described. In this case, Figure 9 shows the blocks of the control unit 30 allowing to automatically perform the manoeuvre, according to known techniques of inverse kinematics. In details, Figure 9 is similar to Figure 8, but the control unit 30 (in details, the elaboration unit 36) further comprises a CLICK ("Closed Loop Inverse Kinematic") block 85. The CLICK block 85 is of a known type, and allows converting trajectories in the Cartesian space into trajectories in the joint space. In details, the CLICK block 85 comprises a second subtraction block 86, a transposed Jacobian block 88, a gain propagator 90 and a direct kinematic block 92. The reconstructed trajectory, in the Cartesian space, from the interpolator 80 is received as a sum input by the second subtraction block 86, that further receives as a subtraction input a direct kinematic signal from the direct kinematic block 92 and generates as output a Cartesian trajectory error that is received as an input by the transposed Jacobian block 88. The transposed Jacobian block 88 converts through a transposed Jacobian matrix the Cartesian trajectory error into a joint trajectory error, which is amplified by the gain propagator block 90 and set as the sum input of the first subtraction block 82. Moreover, data from the sensors 28 are further received as input by the direct kinematic block 92 and converted by it into said direct kinematic signal, in the Cartesian space.

Alternatively, the CLICK block 85 can be substituted by an IIK ("Iterative Inverse Kinematic") block, not shown and of a per se known type.

Furthermore, when executing the reconstructed trajectory, its time scale can be varied based on the actual engine speed (received by the interpolator block 80 as illustrated in Figures 8 and 9). This allows to take into account any variations of the speed of the engine 20, since the actual engine speed (i.e., the engine speed measured while automatically reproduce the reconstructed trajectory, at the time the manoeuvre is repeated) could be different with respect to the engine speed during trajectory recording (in the following, called recorded engine speed), and since the actual engine speed and/or the recorded engine speed could not be uniform in time. In fact, engine speed variations affect the trajectory recording by causing the time axes to accelerate or decelerate accordingly. Therefore, the engine speed of the recorded trajectory is used to compute a ratio between actual engine speed and the recorded engine speed. Such ratio influences the time increment that the interpolator block 80 uses to reproduce the reconstructed trajectory. More in details, each current time instant $t_i$ is calculated as $t_i = t_{i-1} + \Delta t_i$, with:

$$\Delta t_i = k \frac{s_{actual}}{s_{record}}$$

where i is the current step of the interpolator block 80, $k$ is a time scale coefficient (in details, is a calibrated map function of the engine speed and depending on the physical features of hydraulic circuit 26), $t_{i-1}$ is the time instant immediately precedent to the current time instant $t_i$, $\Delta t_i$ is a variable time increment of the interpolator block 80 at step $t_i$, $s_{actual}$ is the actual engine speed at step $t_i$ and $s_{record}$ is the recorded engine speed at step $t_i$ of the reconstructed trajectory. In other words, the time scale of the reconstructed trajectory generated by the interpolator block 80 is a function of the actual engine speed.

The manoeuvre recording button 21 could be placed in a place other than on the joystick 19 (e.g., on a dashboard or a steering wheel of the vehicle 10).

Moreover, it also possible to record the position of the joystick 19 instead of measuring data of the joints 16 through the sensors 28. Since the joystick 19 directly and deterministically controls the controllable arm 12, it is not required to measure the data of the joints 16; instead, it is sufficient to record the positions of the joystick 19 while the user executes the manoeuvre to be recorded. The curve of the positions of the joystick 19 is processed according to the manoeuvre recording method 50, so that the reconstructed trajectory of the joystick 19 can be calculated and used to repeat the manoeuvre, analogously to what has been previously described.

## Claims

1. Method (50) for recording a manoeuvre of an operable arm (12) of a vehicle (10), the operable arm (12) being operable through at least one joint (16) of the operable arm (12), the method comprising the steps of:

   - while a user executes the manoeuvre by operating the operable arm (12), acquiring (S12), by a control unit (30) of the vehicle (10) and for each joint (16), a respective joint position signal indicative of a trajectory of said joint (16), through a respective first sensor (28) coupled to the operable arm (12);
   - for each joint position signal, determining (S16) a respective joint speed signal indicative of the speed of said joint (16);
   - for each joint speed signal, determining (S18), by the control unit (30), a respective plurality of first speed interest points of the joint speed signal, each couple of first speed interest points that are immediately consecutive to each other being indicative of a reciprocal speed difference greater than a threshold speed difference, the plurality of first speed interest points having a respective plurality of first time values;
   - associating (S18) to each plurality of first speed interest points, by the control unit (30), a respective plurality of first position interest points of the joint position signal, having the first time values; and
   - generating (S20), by the control unit (30) and based on each plurality of first position interest points, a respective recorded position signal indicative of the trajectory of said joint (16),

   wherein, when the at least one joint (16) is actuated by the control unit (30) based on the respective recorded position signal, said manoeuvre is automatically executed; the method is **characterized in that** the step of determining (S18) the first speed interest points comprises, in order to calculate each immediately successive speed interest point starting from the considered speed interest point:

   a. calculating an integral average of the joint speed signal, from the first time value of the considered first speed interest point to an intermediate time value successive to the first time value of the considered first speed interest point;

   b. calculating a speed absolute difference between the integral average and the speed of said joint (16) at the considered first speed interest point; and

   if the speed absolute difference is lower than or equal to a predefined speed difference, repeating the steps a. and b. by updating the intermediate time value to a further time value that is successive to the intermediate time value, or
   if the speed absolute difference is greater than the predefined speed difference, setting the intermediate time value and the speed of said joint (16) at the intermediate time value as coordinates of said immediately successive speed interest point.

2. Method according to claim 1 wherein the step of acquiring (S12) the joint position signal comprises starting acquiring the joint position signal upon receipt, by the control unit (30), of a start recording signal provided by the user, and further comprises ending acquiring the joint position signal upon receipt, by the control unit (30), of a stop recording signal provided by the user.

3. Method according to anyone of the preceding claims, wherein a first point and a last point of the joint speed signal are first speed interest points, and a first point and a last point of the joint position signal are first position interest points.

4. Method according to anyone of the preceding claims, further comprising the steps of:

   - for each joint speed signal, determining (S18), by the control unit (30), one or more second speed interest points of the joint speed signal if at least one of said couples of first speed interest points that are immediately consecutive to each other presents a reciprocal time difference greater than a threshold time difference, the one or more second speed interest points having respective second time values;
   - associating (S18) to each second speed interest point, by the control unit (30), a respective second position interest point of the joint position signal, having the respective second time value; and
   - generating (S20), by the control unit (30), the respective recorded position signal further based on each respective second position interest point;

wherein the step of determining (S18) one or more second speed interest points comprises, for each couple of first speed interest points:

a. calculating said reciprocal time difference ($\Delta t$) between the first time values of the first speed interest points of said couple;
b. determining if the reciprocal time difference ($\Delta t$) is greater than a threshold time difference ($\Delta t_{thres}$), and

if the reciprocal time difference ($\Delta t$) is lower than or equal to the threshold time difference ($\Delta t_{thres}$) no second speed interest point is added, or
if the reciprocal time difference ($\Delta t$) is greater than the threshold time difference ($\Delta t_{thres}$) the one or more second speed interest points are added between the first speed interest points of said couple;
and wherein, if the reciprocal time difference ($\Delta t$) is greater than the threshold time difference ($\Delta t_{thres}$): the second speed interest point is added having the second time value equal to the sum of the threshold time difference ($\Delta t_{thres}$) and of the first time value of the first first speed interest point of said couple; and the steps a. and b. of claim 6 are repeated for a successive couple of first speed interest points that are immediately consecutive to each other, said successive couple comprising the added second speed interest point and the second first speed interest point of the couple.

5. Method according to anyone of the preceding claims, wherein the step of determining (S16) the joint speed signal comprises calculating a first order time derivative of the joint position signal.

6. Method according to anyone of claims 1-5, wherein the step of determining (S16) the joint speed signal comprises applying a second order band-pass filter to the joint position signal.

7. Method according to anyone of claims 1-5, wherein the step of determining (S16) the joint speed signal comprises acquiring, by the control unit (30), the joint speed signal through a respective second sensor coupled to the operable arm (12).

8. Method according to anyone of the preceding claims, further comprising the step of storing each plurality of first position interest points in a memory (34) of the control unit (30).

9. Method according to anyone of the preceding claims, wherein the step of generating (S20) the respective recorded position signal comprises calculating a quadratic interpolation of the first position interest points.

10. Method according to anyone of the preceding claims, wherein the step of generating (S20) the respective recorded position signal comprises calculating a time scale of the recorded position signal as a function of an actual speed of an engine (20) of the vehicle (10).

11. Computer program product storable in a control unit (30) for a vehicle (10) comprising a controllable arm; the controllable arm (12) being provided with at least one joint (16) actuated by a respective joint actuator (17) coupled to the joint; an input command acquisition device (19); one or more sensors (28) coupled to the controllable arm so as to acquire data of the joints and the control unit electrically coupled to the sensors, the joint actuators and the joystick;
the computer program being designed so that, when executed, the control unit (30) becomes configured to perform a method according to anyone of claims 1-10.

12. Control unit (30) for a vehicle (10) comprising a controllable arm; the controllable arm (12) being provided with at least one joint (16) actuated by a respective joint actuator (17) coupled to the joint; an input command acquisition device (19); one or more sensors (28) coupled to the controllable arm so as to acquire data of the joints and the control unit electrically coupled to the sensors, the joint actuators and the joystick;

the control unit is configured to:

- while a user executes a manoeuvre by operating an operable arm (12) of a vehicle (10), acquire (S12) for each joint (16) of the operable arm (12) a respective joint position signal indicative of a trajectory of said joint (16), through a respective first sensor (28) coupled to the operable arm (12) and operatively couplable to the control unit (30);
- for each joint position signal, determine (S16) a respective joint speed signal indicative of the speed of said joint (16);
- for each joint speed signal, determine (S18) a respective plurality of first speed interest points of the joint speed signal, each couple of first speed interest points that are immediately consecutive to each other being indicative of a reciprocal speed difference greater than a threshold speed difference, the plurality of first speed interest points having a respective plurality of first time values;

- associate (S18) to each plurality of first speed interest points a respective plurality of first position interest points of the joint position signal, having the first time values; and

- generate (S20), based on each plurality of first position interest points, a respective recorded position signal indicative of the trajectory of said joint (16),

wherein, when the at least one joint (16) is actuated by the control unit (30) based on the respective recorded position signal, said manoeuvre is automatically executed.

13. Vehicle (10) comprising a control unit (30), according to claim 12 and said operable arm (12).

14. Vehicle according to claim 13 wherein the operable arm (12) is controllable by the control unit (30) based on the one or more recorded position signals.

15. Vehicle according to claim 13 or 14, further comprising an input command acquisition device (19) that is the operable arm (12).

**Patentansprüche**

1. Verfahren (50) zum Aufzeichnen eines Manövers eines betätigbaren Arms (12) eines Fahrzeugs (10), wobei der betätigbare Arm (12) über zumindest ein Gelenk (16) des betätigbaren Arms (12) betätigbar ist, wobei das Verfahren folgende Schritte aufweist:

während ein Benutzer das Manöver durch Betätigung des betätigbaren Arms (12) ausführt, Erfassen (S12) eines jeweiligen Gelenkpositionssignals durch eine Steuereinheit (30) des Fahrzeugs (10) und für jedes Gelenk (16), wobei das jeweilige Gelenkpositionssignal eine Trajektorie des jeweiligen Gelenks (16) anzeigt, durch einen jeweiligen ersten Sensor (28), der mit dem betätigbaren Arm (12) gekoppelt ist;

für jedes Gelenkpositionssignal Bestimmen (S16) eines jeweiligen Gelenkgeschwindigkeitssignals, das die Geschwindigkeit des jeweiligen Gelenks (16) anzeigt;

für jedes Gelenkgeschwindigkeitssignal Bestimmen (S18) einer jeweiligen Mehrzahl erster Geschwindigkeitsinteressenspunkte des Gelenkgeschwindigkeitssignals durch die Steuereinheit (30), wobei jedes Paar unmittelbar aufeinanderfolgender erster Geschwindigkeitsinteressenspunkte auf eine gegenseitige Geschwindigkeitsdifferenz hinweist, die größer als eine Schwellenwert-Geschwindigkeitsdifferenz ist, wobei die Mehrzahl erster Geschwindigkeitsinteressenspunkte jeweils eine Mehrzahl erster Zeitwerte aufweist;

Zuordnen (S18) einer jeweiligen Mehrzahl erster Positionsinteressenspunkte des Gelenkpositionssignals zu jeder Mehrzahl erster Geschwindigkeitsinteressenspunkte durch die Steuereinheit (30), wobei die ersten Zeitwerte übernommen werden; und

Erzeugen (S20) eines jeweiligen aufgezeichneten Positionssignals durch die Steuereinheit (30) auf der Grundlage jeder Mehrzahl erster Positionsinteressenspunkte, wobei das jeweilige aufgezeichnete Positionssignal die Trajektorie des jeweiligen Gelenks (16) anzeigt,

wobei, wenn das zumindest eine Gelenk (16) durch die Steuereinheit (30) basierend auf dem jeweiligen aufgezeichneten Positionssignal betätigt wird, das Manöver automatisch ausgeführt wird;

wobei das Verfahren **dadurch gekennzeichnet ist, dass** der Schritt des Bestimmens (S18) der ersten Geschwindigkeitsinteressenspunkte, zum Berechnen jedes unmittelbar folgenden Geschwindigkeitsinteressenspunkts ausgehend vom betrachteten Geschwindigkeitsinteressenspunkt folgende Schritte aufweist:

a. Berechnen eines integralen Mittelwerts des Gelenkgeschwindigkeitssignals vom ersten Zeitwert des betrachteten ersten Geschwindigkeitsinteressenspunkts bis zu einem auf den ersten Zeitwert folgenden Zwischenzeitwert;

b. Berechnen einer absoluten Geschwindigkeitsdifferenz zwischen dem integralen Mittelwert und der Geschwindigkeit des jeweiligen Gelenks (16) am betrachteten ersten Geschwindigkeitsinteressenspunkt; und

wenn die absolute Geschwindigkeitsdifferenz kleiner oder gleich einer vorgegebenen Geschwindigkeitsdifferenz ist, Wiederholen der Schritte a. und b. durch Aktualisierung des Zwischenzeitwerts auf einen weiteren, auf den Zwischenzeitwert folgenden Zeitwert, oder

wenn die absolute Geschwindigkeitsdifferenz größer als die vorgegebene Geschwindigkeitsdifferenz ist, Festlegen des Zwischenzeitwerts und der Geschwindigkeit des jeweiligen Gelenks (16) zum Zwischenzeitwert als Koordinaten des unmittelbar folgenden Geschwindigkeitsinteressenspunkts.

2. Verfahren nach Anspruch 1, wobei das Erfassen (S12) des Gelenkpositionssignals das Beginnen des Erfassens des Gelenkpositionssignals beim Empfang eines Aufzeichnungssignals durch die Steuereinheit (30), bereitgestellt durch den Benutzer, sowie das Beenden des Erfassens beim Empfang eines Stoppsignals zur Aufzeichnung durch die Steuereinheit (30), bereitgestellt durch den Benutzer, umfasst.

**3.** Verfahren nach einem der vorhergehenden Ansprüche, wobei ein erster Punkt und ein letzter Punkt des Gelenkgeschwindigkeitssignals erste Geschwindigkeitsinteressenspunkte sind und ein erster Punkt und ein letzter Punkt des Gelenkpositionssignals erste Positionsinteressenspunkte sind.

**4.** Verfahren nach einem der vorhergehenden Ansprüche, das des Weiteren folgende Schritte aufweist:

- für jedes Gelenkgeschwindigkeitssignal Bestimmen (S18) eines oder mehrerer zweiter Geschwindigkeitsinteressenspunkte des Gelenkgeschwindigkeitssignals durch die Steuereinheit (30), wenn zumindest eines der Paare von unmittelbar aufeinanderfolgenden ersten Geschwindigkeitsinteressenspunkten eine gegenseitige Zeitdifferenz aufweist, die größer als eine Schwellenwert-Zeitdifferenz ist, wobei das eine oder die mehreren zweiten Geschwindigkeitsinteressenspunkte jeweilige zweite Zeitwerte aufweisen;

- Zuordnen (S18) eines jeweiligen zweiten Positionsinteressenspunkts des Gelenkpositionssignals zu jedem zweiten Geschwindigkeitsinteressenspunkt durch die Steuereinheit (30), wobei der jeweilige zweite Zeitwert übernommen wird; und

- Erzeugen (S20) des jeweiligen aufgezeichneten Positionssignals durch die Steuereinheit (30), zusätzlich basierend auf jedem jeweiligen zweiten Positionsinteressenspunkt;

wobei der Schritt des Bestimmens (S18) eines oder mehrerer zweiter Geschwindigkeitsinteressenspunkte für jedes Paar erster Geschwindigkeitsinteressenspunkte umfasst:

a. Berechnen der gegenseitigen Zeitdifferenz ($\Delta t$) zwischen den ersten Zeitwerten der ersten Geschwindigkeitsinteressenspunkte des betreffenden Paars;
b. Ermitteln, ob die gegenseitige Zeitdifferenz ($\Delta t$) größer als eine Schwellenwert-Zeitdifferenz ($\Delta t_{thres}$) ist, und

wenn die gegenseitige Zeitdifferenz ($\Delta t$)

kleiner oder gleich der Schwellenwert-Zeitdifferenz ($\Delta t_{thres}$) ist, wird kein zweiter Geschwindigkeitsinteressenspunkt hinzugefügt, oder

wenn die gegenseitige Zeitdifferenz ($\Delta t$) größer als die Schwellenwert-Zeitdifferenz ($\Delta t_{thres}$) ist, wird einer oder werden mehrere zweite Geschwindigkeitsinteressenspunkte zwischen den ersten Geschwindigkeitsinteressenspunkten des betreffenden Paars hinzugefügt;

und wobei, wenn die gegenseitige Zeitdifferenz ($\Delta t$) größer als die Schwellenwert-Zeitdifferenz ($\Delta t_{thres}$) ist: der zweite Geschwindigkeitsinteressenspunkt wird mit einem zweiten Zeitwert hinzugefügt, der der Summe der Schwellenwert-Zeitdifferenz ($\Delta t_{thres}$) und des ersten Zeitwerts des ersten ersten Geschwindigkeitsinteressenspunkts des Paars entspricht; und die Schritte a. und b. von Anspruch 6 werden für ein folgendes Paar unmittelbar aufeinanderfolgender erster Geschwindigkeitsinteressenspunkte wiederholt, wobei das folgende Paar den hinzugefügten zweiten Geschwindigkeitsinteressenspunkt und den zweiten ersten Geschwindigkeitsinteressenspunkt des Paars umfasst.

**5.** Verfahren nach einem der vorhergehenden Ansprüche, wobei das Bestimmen (S16) des Gelenkgeschwindigkeitssignals das Berechnen einer ersten zeitlichen Ableitung erster Ordnung des Gelenkpositionssignals umfasst.

**6.** Verfahren nach einem der Ansprüche 1 bis 5, wobei das Bestimmen (S16) des Gelenkgeschwindigkeitssignals das Anwenden eines Bandpassfilters zweiter Ordnung auf das Gelenkpositionssignal aufweist.

**7.** Verfahren nach einem der Ansprüche 1 bis 5, wobei das Bestimmen (S16) des Gelenkgeschwindigkeitssignals das Erfassen des Gelenkgeschwindigkeitssignals durch die Steuereinheit (30) über einen jeweiligen zweiten Sensor, der mit dem betätigbaren Arm (12) gekoppelt ist, aufweist.

**8.** Verfahren nach einem der vorhergehenden Ansprüche, das des Weiteren das Speichern jeder Mehrzahl erster Positionsinteressenspunkte in einem Speicher (34) der Steuereinheit (30) aufweist.

**9.** Verfahren nach einem der vorhergehenden Ansprüche, wobei das Erzeugen (S20) des jeweiligen aufgezeichneten Positionssignals das Berechnen einer quadratischen Interpolation der ersten Positionsinteressenspunkte aufweist.

10. Verfahren nach einem der vorhergehenden Ansprüche, wobei das Erzeugen (S20) des jeweiligen aufgezeichneten Positionssignals das Berechnen einer Zeitachse des aufgezeichneten Positionssignals in Abhängigkeit von einer aktuellen Geschwindigkeit eines Motors (20) des Fahrzeugs (10) umfasst.

11. Computerprogrammprodukt, das in einer Steuereinheit (30) für ein Fahrzeug (10) speicherbar ist, das einen steuerbaren Arm aufweist, wobei der steuerbare Arm (12) mit zumindest einem Gelenk (16) versehen ist, das durch einen jeweiligen Gelenkantrieb (17), der mit dem Gelenk gekoppelt ist, betätigt wird; eine Eingabebefehlserfassungseinrichtung (19); einen oder mehrere Sensoren (28), die mit dem steuerbaren Arm gekoppelt sind, um Daten der Gelenke zu erfassen; und wobei die Steuereinheit elektrisch mit den Sensoren, den Gelenkantrieben und dem Joystick gekoppelt ist; wobei das Computerprogramm derart eingerichtet ist, dass beim Ausführen die Steuereinheit (30) dazu eingerichtet ist, ein Verfahren nach einem der Ansprüche 1 bis 10 auszuführen.

12. Steuereinheit (30) für ein Fahrzeug (10), das einen steuerbaren Arm aufweist, wobei der steuerbare Arm (12) mit zumindest einem Gelenk (16) versehen ist, das durch einen jeweiligen Gelenkantrieb (17), der mit dem Gelenk gekoppelt ist, betätigt wird; eine Eingabebefehlserfassungseinrichtung (19); einen oder mehrere Sensoren (28), die mit dem steuerbaren Arm gekoppelt sind, um Daten der Gelenke zu erfassen, und wobei die Steuereinheit elektrisch mit den Sensoren, den Gelenkantrieben und dem Joystick gekoppelt ist; wobei die Steuereinheit dazu eingerichtet ist, um:

> während ein Benutzer ein Manöver durch Betätigung eines betätigbaren Arms (12) eines Fahrzeugs (10) ausführt, für jedes Gelenk (16) des betätigbaren Arms (12) ein jeweiliges Gelenkpositionssignal zu erfassen (S12), das eine Trajektorie des jeweiligen Gelenks (16) anzeigt, über einen jeweiligen ersten Sensor (28), der mit dem betätigbaren Arm (12) gekoppelt und operativ mit der Steuereinheit (30) verbindbar ist;
> für jedes Gelenkpositionssignal ein jeweiliges Gelenkgeschwindigkeitssignal zu bestimmen (S16), das die Geschwindigkeit des jeweiligen Gelenks (16) anzeigt;
> für jedes Gelenkgeschwindigkeitssignal eine jeweilige Mehrzahl erster Geschwindigkeitsinteressenspunkte des Gelenkgeschwindigkeitssignals zu bestimmen (S18), wobei jedes Paar unmittelbar aufeinanderfolgender erster Geschwindigkeitsinteressenspunkte auf eine gegenseitige Geschwindigkeitsdifferenz hinweist, die größer als eine Schwellenwert-Geschwindigkeitsdifferenz ist, wobei die Mehrzahl erster Geschwindigkeitsinteressenspunkte jeweils eine Mehrzahl erster Zeitwerte aufweist;
jeder Mehrzahl erster Geschwindigkeitsinteressenspunkte eine jeweilige Mehrzahl erster Positionsinteressenspunkte des Gelenkpositionssignals mit den ersten Zeitwerten zuzuordnen (S18); und
basierend auf jeder Mehrzahl erster Positionsinteressenspunkte ein jeweiliges aufgezeichnetes Positionssignal zu erzeugen (S20), das die Trajektorie des jeweiligen Gelenks (16) anzeigt, wobei, wenn das zumindest eine Gelenk (16) durch die Steuereinheit (30) basierend auf dem jeweiligen aufgezeichneten Positionssignal betätigt wird, das Manöver automatisch ausgeführt wird.

13. Fahrzeug (10), eine Steuereinheit (30) nach Anspruch 12 und den betätigbaren Arm (12) aufweist.

14. Fahrzeug nach Anspruch 13, wobei der betätigbare Arm (12) durch die Steuereinheit (30) basierend auf einem oder mehreren aufgezeichneten Positionssignalen steuerbar ist.

15. Fahrzeug nach Anspruch 13 oder 14, das des Weiteren eine Eingabebefehlserfassungseinrichtung (19) aufweist, die der betätigbare Arm (12) ist.

**Revendications**

1. Procédé (50) d'enregistrement d'une manœuvre d'un bras actionnable (12) d'un véhicule (10), le bras actionnable (12) pouvant être actionné par au moins une articulation (16) du bras actionnable (12), le procédé comprenant les étapes consistant à :

> - pendant qu'un utilisateur exécute la manœuvre en actionnant le bras actionnable (12), acquérir (S12), par une unité de commande (30) du véhicule (10) et pour chaque articulation (16), un signal de position d'articulation respective indicatif d'une trajectoire de ladite articulation (16), par l'intermédiaire d'un premier capteur respectif (28) couplé au bras actionnable (12) ;
> - pour chaque signal de position d'articulation, déterminer (S16) un signal de vitesse d'articulation respective indicatif de la vitesse de ladite articulation (16) ;
> - pour chaque signal de vitesse d'articulation, déterminer (S18), par l'intermédiaire de l'unité de commande (30), une pluralité respective de premiers points d'intérêt de vitesse du signal de vitesse d'articulation, chaque couple de premiers points d'intérêt de vitesse qui sont immédiatement consécutifs l'un à l'autre étant indicatif d'une différence de vitesse réciproque supérieure à une différence de vitesse seuil, la pluralité de premiers points d'intérêt de vitesse ayant une pluralité respective de premières valeurs temporelles ;

- associer (S18) à chaque pluralité de premiers points d'intérêt de vitesse, par l'unité de commande (30), une pluralité respective de premiers points d'intérêt de position du signal de position d'articulation, ayant les premières valeurs temporelles ; et

- générer (S20), par l'unité de commande (30) et en fonction de chaque pluralité de premiers points d'intérêt de position, un signal de position enregistré respectif indiquant la trajectoire de ladite articulation (16),

dans lequel, lorsque l'au moins une articulation (16) est actionnée par l'unité de commande (30) en fonction du signal de position enregistré respectif, ladite manœuvre est automatiquement exécutée ;

le procédé est **caractérisé en ce que** l'étape de détermination (S18) des premiers points d'intérêt de vitesse comprend, afin de calculer chaque point d'intérêt de vitesse immédiatement successif à partir du point d'intérêt de vitesse considéré :

a. le calcul d'une moyenne intégrale du signal de vitesse d'articulation, à partir de la première valeur temporelle du premier point d'intérêt de vitesse considéré jusqu'à une valeur temporelle intermédiaire successive à la première valeur temporelle du premier point d'intérêt de vitesse considéré ;

b. le calcul d'une différence absolue de vitesse entre la moyenne intégrale et la vitesse de ladite articulation (16) au premier point d'intérêt de vitesse considéré ; et

si la différence absolue de vitesse est inférieure ou égale à une différence de vitesse prédéfinie, la répétition des étapes a. et b. en mettant à jour la valeur temporelle intermédiaire vers une autre valeur temporelle qui est successive à la valeur temporelle intermédiaire, ou

si la différence absolue de vitesse est supérieure à la différence de vitesse prédéfinie, le paramétrage de la valeur temporelle intermédiaire et de la vitesse de ladite articulation (16) à la valeur temporelle intermédiaire comme coordonnées dudit point d'intérêt de vitesse immédiatement successif.

2. Procédé selon la revendication 1, dans lequel l'étape d'acquisition (S12) du signal de position d'articulation consiste à commencer l'acquisition du signal de position d'articulation lors de la réception, par l'unité de commande (30), d'un signal de début d'enregistrement fourni par l'utilisateur, et consiste en outre à terminer l'acquisition du signal de position d'articulation lors de la réception, par l'unité de commande (30), d'un signal d'arrêt d'enregistrement fourni par l'utilisateur.

3. Procédé selon l'une quelconque des revendications précédentes, dans lequel un premier point et un dernier point du signal de vitesse d'articulation sont des premiers points d'intérêt de vitesse, et un premier point et un dernier point du signal de position d'articulation sont des premiers points d'intérêt de position.

4. Procédé selon l'une quelconque des revendications précédentes, comprenant en outre les étapes consistant à :

- pour chaque signal de vitesse d'articulation, déterminer (S18), à l'aide de l'unité de commande (30), un ou plusieurs seconds points d'intérêt de vitesse du signal de vitesse d'articulation si au moins un desdits couples des premiers points d'intérêt de vitesse qui sont immédiatement consécutifs l'un à l'autre présente un écart temporel réciproque supérieur à un écart temporel seuil, le ou les seconds points d'intérêt de vitesse ayant de secondes valeurs temporelles respectives ;

- associer (S18) à chaque second point d'intérêt de vitesse, à l'aide de l'unité de commande (30), un second point d'intérêt de position respectif du signal de position d'articulation, ayant la seconde valeur temporelle respective ; et

- générer (S20), à l'aide de l'unité de commande (30), le signal de position enregistré respectif en fonction en outre de chaque second point d'intérêt de position respectif ;

dans lequel l'étape de détermination (S18) d'un ou de plusieurs seconds points d'intérêt de vitesse comprend, pour chaque couple de premiers points d'intérêt de vitesse :

a. le calcul dudit écart temporel réciproque ($\Delta t$) entre les premières valeurs temporelles des premiers points d'intérêt de vitesse dudit couple ;

b. la détermination si l'écart temporel réciproque ($\Delta t$) est supérieur à un écart temporel seuil ($\Delta t_{thres}$), et

si l'écart temporel réciproque ($\Delta t$) est infé-

rieur ou égal à l'écart temporel seuil ($\Delta t_{thres}$), aucun second point d'intérêt de vitesse n'est ajouté, ou

si l'écart temporel réciproque ($\Delta t$) est supérieur à l'écart temporel seuil ($\Delta t_{thres}$), le ou les seconds points d'intérêt de vitesse sont ajoutés entre les premiers points d'intérêt de vitesse dudit couple ;

et dans lequel, si l'écart temporel réciproque ($\Delta t$) est supérieur à l'écart temporel seuil ($\Delta t_{thres}$) : le second point d'intérêt de vitesse est ajouté en ayant la seconde valeur temporelle égale à la somme de l'écart temporel seuil ($\Delta t_{thres}$) et de la première valeur temporelle du premier premier point d'intérêt de vitesse dudit couple ; et les étapes a. et b. selon la revendication 6 sont répétées pour un couple successif de premiers points d'intérêt de vitesse qui sont immédiatement consécutifs l'un à l'autre, ledit couple successif comprenant le second point d'intérêt de vitesse ajouté et le second premier point d'intérêt de vitesse du couple.

5. Procédé selon l'une quelconque des revendications précédentes, dans lequel l'étape de détermination (S16) du signal de vitesse d'articulation comprend le calcul d'une dérivée temporelle de premier ordre du signal de position d'articulation.

6. Procédé selon l'une quelconque des revendications 1 à 5, dans lequel l'étape de détermination (S16) du signal de vitesse d'articulation consiste à appliquer un filtre passe-bande de second ordre au signal de position d'articulation.

7. Procédé selon l'une quelconque des revendications 1 à 5, dans lequel l'étape de détermination (S16) du signal de vitesse d'articulation comprend l'acquisition, à l'aide de l'unité de commande (30), du signal de vitesse d'articulation par l'intermédiaire d'un second capteur respectif couplé au bras actionnable (12).

8. Procédé selon l'une quelconque des revendications précédentes, comprenant en outre l'étape consistant à stocker chaque pluralité de premiers points d'intérêt de position dans une mémoire (34) de l'unité de commande (30).

9. Procédé selon l'une quelconque des revendications précédentes, dans lequel l'étape de génération (S20) du signal de position enregistré respectif comprend le calcul d'une interpolation quadratique des premiers points d'intérêt de position.

10. Procédé selon l'une quelconque des revendications précédentes, dans lequel l'étape de génération (S20) du signal de position enregistré respectif comprend le calcul d'une échelle temporelle du signal de position enregistré en fonction d'une vitesse réelle d'un moteur (20) du véhicule (10).

11. Produit reposant sur un programme informatique stockable dans une unité de commande (30) pour un véhicule (10) comprenant un bras commandable ; le bras commandable (12) étant pourvu d'au moins une articulation (16) actionnée par un actionneur d'articulation respectif (17) couplé à l'articulation ; un dispositif d'acquisition de commande d'entrée (19) ; un ou plusieurs capteurs (28) couplés au bras commandable afin d'acquérir des données sur les articulations et l'unité de commande couplée électriquement aux capteurs, aux actionneurs d'articulation et au joystick ; le programme informatique étant conçu pour que, lorsqu'il est exécuté, l'unité de commande (30) devienne configurée pour exécuter un procédé selon l'une quelconque des revendications 1 à 10.

12. Unité de commande (30) pour un véhicule (10) comprenant un bras commandable ; le bras commandable (12) étant pourvu d'au moins une articulation (16) actionnée par un actionneur d'articulation respectif (17) couplé à l'articulation ; un dispositif d'acquisition de commande d'entrée (19) ; un ou plusieurs capteurs (28) couplés au bras commandable afin d'acquérir des données sur les articulations et l'unité de commande couplée électriquement aux capteurs, aux actionneurs d'articulation et au joystick ;

l'unité de commande est configurée pour :

- lorsqu'un utilisateur exécute une manœuvre en actionnant un bras actionnable (12) d'un véhicule (10), acquérir (S12) pour chaque articulation (16) du bras actionnable (12) un signal de position d'articulation respective indiquant une trajectoire de ladite articulation (16), par l'intermédiaire d'un premier capteur respectif (28) couplé au bras actionnable (12) et pouvant être couplé fonctionnellement à l'unité de commande (30) ;
- pour chaque signal de position d'articulation, déterminer (S16) un signal de vitesse d'articulation respectif indiquant la vitesse de ladite articulation (16) ;
- pour chaque signal de vitesse d'articulation, déterminer (S18) une pluralité respective de premiers points d'intérêt de vitesse du signal de vitesse d'articulation, chaque couple de premiers points d'intérêt de vitesse qui sont immédiatement consécutifs l'un à l'autre étant indicatif d'une différence de vitesse réciproque supérieure à une différence de vitesse seuil, la pluralité de premiers points d'intérêt de vitesse ayant une pluralité respective de premières valeurs temporelles ;

- associer (S18) à chaque pluralité de premiers points d'intérêt de vitesse une pluralité respective de premiers points d'intérêt de position du signal de position d'articulation, ayant les premières valeurs temporelles ; et

- générer (S20) en fonction de chaque pluralité de premiers points d'intérêt de position, un signal de position enregistré respectif indiquant la trajectoire de ladite articulation (16),

dans lequel, lorsque l'au moins une articulation (16) est actionnée par l'unité de commande (30) en fonction du signal de position enregistré respectif, ladite manœuvre est automatiquement exécutée.

13. Véhicule (10) comprenant une unité de commande (30), selon la revendication 12 et ledit bras actionnable (12).

14. Véhicule selon la revendication 13, dans lequel le bras actionnable (12) peut être commandé par l'unité de commande (30) en fonction d'un ou de plusieurs signaux de position enregistrés.

15. Véhicule selon la revendication 13 ou la revendication 14, comprenant en outre un dispositif d'acquisition de commande d'entrée (19) qui correspond au bras actionnable (12).

FIG. 1

EP 4 056 328 B1

FIG. 2

FIG. 3

FIG. 4

FIG. 5

FIG. 6

FIG. 7

FIG. 8

FIG. 9

**EP 4 056 328 B1**

**REFERENCES CITED IN THE DESCRIPTION**

**Patent documents cited in the description**

- EP 3770333 A1